## Europäisches Patentamt
## European Patent Office
## Office européen des brevets

(19)

(11) Veröffentlichungsnummer: **0 214 146**
**B1**

(12)

# EUROPÄISCHE PATENTSCHRIFT

(45) Veröffentlichungstag der Patentschrift:
**21.09.88**

(51) Int. Cl.⁴: **B 65 G 25/02,** B 65 G 1/06

(21) Anmeldenummer: **85905062.7**

(22) Anmeldetag: **12.10.85**

(86) Internationale Anmeldenummer:
**PCT/EP 85/00538**

(87) Internationale Veröffentlichungsnummer:
**WO 86/04883 (28.08.86 Gazette 86/19)**

(54) **FÖRDERVORRICHTUNG FÜR CONTAINER ODER PALETTEN.**

(30) Priorität: **13.02.85 DE 3504869**
**08.05.85 DE 3516441**

(43) Veröffentlichungstag der Anmeldung:
**18.03.87 Patentblatt 87/12**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
**FR-A-2 431 445**
**GB-A-1 417 373**
**GB-A-2 041 321**

(73) Patentinhaber: **Spier GmbH, Industriestrasse, D-4939 Steinheim (DE)**

(72) Erfinder: **HAGEDORN, Herbert, Püngelsberg 1, D-4939 Horn- Bad Meinberg (DE)**
Erfinder: **SPIER, Wilhelm, Heideweg 14, D-4939 Steinheim (DE)**

(74) Vertreter: **Hanewinkel, Lorenz, Dipl.- Phys., Patentanwalt Ferrariweg 17a, D-4790 Paderborn (DE)**

## Beschreibung

Die Erfindung betrifft eine Fördervorrichtung für Sammeltransportmittel, z. B. Container, die vorzugsweise im Boden eines Laderaumes, z. B. in einem Lastkraftfahr- oder -flugzeug angeordnet ist und aus parallelen Bahnen besteht, zwischen denen ein über bzw. unter das Bodenniveau heb- und senkbarer Mitnehmer in einer weiteren parallelen Bahn gelagert ist, der über die gesamte Bahnlänge durch eine um endseitig gelagerte Umlenkräder umlaufende Zugkette oder ein Zugseil mittels eines Antriebsmotors über eines der Umlenkräder steuerbar in beiden Richtungen verfahrbar ist und der eine Grund- und eine Deckplatte hat, die mittels einer Höhenverstellvorrichtung gegen die in der Mitnehmerbahn auf Räderpaaren mit Achsen fahrbar gelagerte Grundplatte dadurch höhenverstellbar ist, daß die Deckplatte oder die Grundplatte und die Höhenverstellvorrichtung jeweils mit einem Ende der Kette verbunden sind, in deren Spannrichtung eines der Umlenkräder beweglich gelagert ist, das mit einem steuerbaren Spannantrieb verbunden ist.

Aus der FR-A-2 431 445 ist eine derartige Vorrichtung bekannt, bei der zwischen der Deckplatte, deren Oberseite die Mitnehmerfläche trägt, und der Grundplatte Schwenkhebel angeordnet sind, die bei angespannter Zugkette in eine senkrechte Totlage verbracht sind, so daß der Mitnehmer seine maximale Höhenlage einnimmt. Eine Feder dient dem Rückholen der Schwenkhebel bei Entspannung der Zugkette.

Weiterhin ist aus der GB-A-1 417 373 eine Fördervorrichtung bekannt, bei der unter einem Mitnehmer Keile befestigt sind, gegen die eine darunter verschieblich gelagerte, komplementäre Keilanordnung gerichtet ist, so daß bei Anwendung einer periodischen Schiebebewegung der unteren Keilanordnung der obere Mitnehmer periodisch hebend und schiebend aufwärts und vorwärts bewegt wird. Hierbei ist eine Bewegung des Mitnehmergutes nur in einer Richtung möglich.

Weiterhin sind aus der GB-A-2 041 321 Fördervorrichtungen für Paletten bekannt, bei der zwischen der fahrbaren Bodenplatte und der Deckplatte hydraulische oder pneumatische Heber angeordnet sind, die über mitgeschleppte Schlauchleitungen versorgt werden oder bei der unter der Bodenplatte eine höhenverstellbare Fahrbahn angeordnet ist. Diese ist als tragende Konstruktion ausgebildet und ist mit Rollen auf schiefen Ebenen gelagert, so daß durch eine Verschiebung der Bahn deren Höhe und damit die Höhe des fahrbaren Mitnehmers verändert wird.

Eine weitere bekannte Vorrichtungen dieser Art ist für Container vorgesehen. Sie ist zwecks Höhenverstellbarkeit des Mitnehmers ebenfalls mit einer auf ihrer ganzen Länge höhenverstellbaren Mitnehmerbahn ausgerüstet. Diese liegt auf der gesamten Länge auf pneumatisch aufblähbaren Schlauchkörpern auf und hebt und senkt sich durch Druckluftzufuhr bzw. Ablassen derselben auf ihrer ganzen Länge. Ist nun der Mitnehmer in eine Endstellung gefahren und der Container sehr schwer, z. B. 6 t, so stellt sich die Bahn schräg, und sie kann nur durch weitere Druckluftzufuhr ausreichend angehoben werden, um den Mitnahmeeffekt zu erreichen. Wenn der Mitnehmer mit dem Container bis zum Mittelbereich der Bahn gefahren ist, so ist jedoch der anfangs aufgegebene Druck zu hoch, da die Bahn dann gerade steht. Dadurch liegt der Container zu sehr auf dem Mitnehmer und zu wenig auf den parallelen Rollenbahnen auf, wodurch die Mitnehmerrollen überlastet werden können und eine Deformation des Containers möglich ist.

Der Mitnehmer ist großflächig und mit einer Haftschicht versehen, damit die aus Leichtmetall bestehenden Container oder die Paletten nicht punktweise belastet und dadurch beschädigt werden. Die bekannten, parallelen Bahnen, die neben der Mitnehmerbahn liegen, sind mit hydraulisch über bzw. unter das Bodenniveau heb- bzw. senkbaren Rollen bestückt.

Eine besondere Konstruktionsbedingung ist es, daß die Vorrichtung möglichst flach, z. B. nicht höher als 57 mm, sein muß, damit keine Ladehöhe im Laderaum verloren geht.

Es ist Aufgabe der Erfindung, eine Fördervorrichtung mit einem Mitnehmer und einer Mitnehmerbahn zu offenbaren, die geringe Bauhöhe und geringes Gewicht hat, die gegen schlagartige Beanspruchung, insbes. durch mit einer Kante aufgesetzte Container, gegen Beschädigung gesichert ist und die eine Sicherung des Containers gegen Beschädigung durch Schlagbeanspruchung erbringt, die einfach und preiswert in der Herstellung ist, und die in allen Fahrpositionen ohne Nachsteuerung die gleiche Hubkraft erbringt, so daß die Mitnahme stets gesichert und eine Beschädigung des Containers ausgeschlossen ist.

Die Lösung der Aufgabe besteht darin, daß die Achsen der Räder um einen solchen Bereich vertikal beweglich federnd gelagert sind, daß die Grundplatte den Boden der Mitnehmerbahn erreichen kann, und daß die Achsen jeweils beidseitig auf der Grundplatte in Lagerbügeln, die in Führungsbolzen vertikal geführt sind, liegen und auf die Lagerbügel jeweils beidseitig Federpaare drücken, die andererseits sich jeweils an einem Kopf oder einer Mutter der Führungsbolzen abstützen, wobei die Federn aller Achsen zusammengenommen so hoch vorgespannt sind, daß, wenn die Achsen in ihrer untersten Stellung sind, sie eine vorgegebene Mitnehmerhubkraft aufbringen.

Die vorteilhafte Ausgestaltung des Mitnehmers ist durch die elastische, stoßgesicherte Lagerung auf Rädern gegeben.

Die Wirkung der elastischen Lagerung der Räder ergänzt vorteilhaft eine konstruktiv definierte maximale Hubkraft der Verstellvorrichtung des Mitnehmers.

2

Zweckmäßig werden schmale Räder an dem Mitnehmer vorgesehen, was durch die elastische Lagerung und Hubkraftbegrenzung möglich ist, da den schmalen Rädern kleine Hindernisse, z. B. Steine, die häufig in die Bahn fallen, leicht ausweichen können. Vorteilhaft ist vor und hinter dem Mitnehmer eine Bürste angebracht, die die Führungsbahn beim hin- und herfahren sauber fegt. In der Führungsbahn sind ca. 8 mm große Löcher vorgesehen, durch die der Schmutz durchfallen kann.

Die Spanneinrichtung kann zweckmäßig ein Pneumatikzylinder sein, der mit Druckluft aus der Luftfederanlage des Fahrzeuges versorgt wird. Eine andere zweckmäßige Ausgestaltung ist es, einen Hydraulikzylinder für die Spanneinrichtung zu verwenden, sofern auch die Rollenbahnen hydraulisch betrieben werden.

Da nur der kleine Zylinder des Spannantriebes für jeden Transportvorgang gefüllt und geleert werden muß, ist der Druckluftverbrauch sehr gering, so daß i .a. der Luftvorrat einer Luftfederanlage ohne Zusatzspeicherbehälter für so viele Hubvorgänge ausreicht, daß ein gesamter Laderaum zu füllen ist.

Eine weitere vorteilhafte Ausgestaltung für die beschriebene Containerfördervorrichtung ist dadurch gegeben, daß die parallelen Bahnen, die bisher aufwendige heb- und senkbare Rollenbahnen waren, Gleitbahnen sind, die vorzugsweise aus in Bahnrichtung profiliertem Kunststoff oder Edelstahl bestehen. Dies bringt eine erhebliche Kosten- und Gewichtsersparnis, wobei letztere sich insbes. bei der Ausrüstung von Transportflugzeugen durch Treibstofffersparnis bzw. Erhöhung des Ladegewichts kost ensparend auswirkt. Hinzu kommt der Vorteil, daß der Transport auf Gleitbahnen, verglichen zu dem auf Rollenbahnen, völlig rüttelfrei ist.

Die Verwendung von Gleitbahnen statt Rollenbahnen hat weiterhin den sicherheitstechnischen Vorteil, daß die Ladung stets verschiebegesichert ist und auch bei schräg stehender Ladefläche nicht verrutschen kann und auch beund entladen werden kann.

Eine weitere vorteilhafte Ausgestaltung besteht darin, daß mehrere Mitnehmer mit einem Antrieb parallel betrieben werden. Dadurch kann die Be- und Entladezeit verkürzt werden, und es ist nur ein Antriebsmotor erforderlich. Sofern beide Ketten durch Hintereinander- oder Parallelanordnung auch über die gleiche Spannvorrichtung geführt sind, ist nur ein Spannantrieb erforderlich. Die Länge der Kette bzw. Ketten ist zweckmäßig durch eine Spanneinrichtung an dem bzw. den Mitnehmern passend einstellbar.

Fig. 1 zeigt einen verkürzten Grundriß einer Gesamtvorrichtung teilweise geöffnet.

Fig. 2 zeigt einen vertikalen Längsschnitt gem. II-II durch einen Mitnehmer-Bahnabschnitt und einen Mitnehmerabschnitt.

Fig. 3 zeigt einen vertikalen Querschnitt gem. III-III der Mitnehmer-Bahn und des Mitnehmers.

Fig. 4 zeigt einen vertikalen Längsschnitt durch einen anderen Mitnehmerabschnitt teilweise vereinfacht.

Fig. 5 zeigt eine Alternative zu Fig. 2, Schnitt VI-VI.

Fig. 6 zeigt einen vertikalen Schnitt V-V zu Fig. 5.

Fig. 7 und 8 zeigen Querschnitte durch Gleitbahnvorrichtungen.

Fig. 9 zeigt eine Aufsicht auf eine Doppelbahnvorrichtung für Paletten.

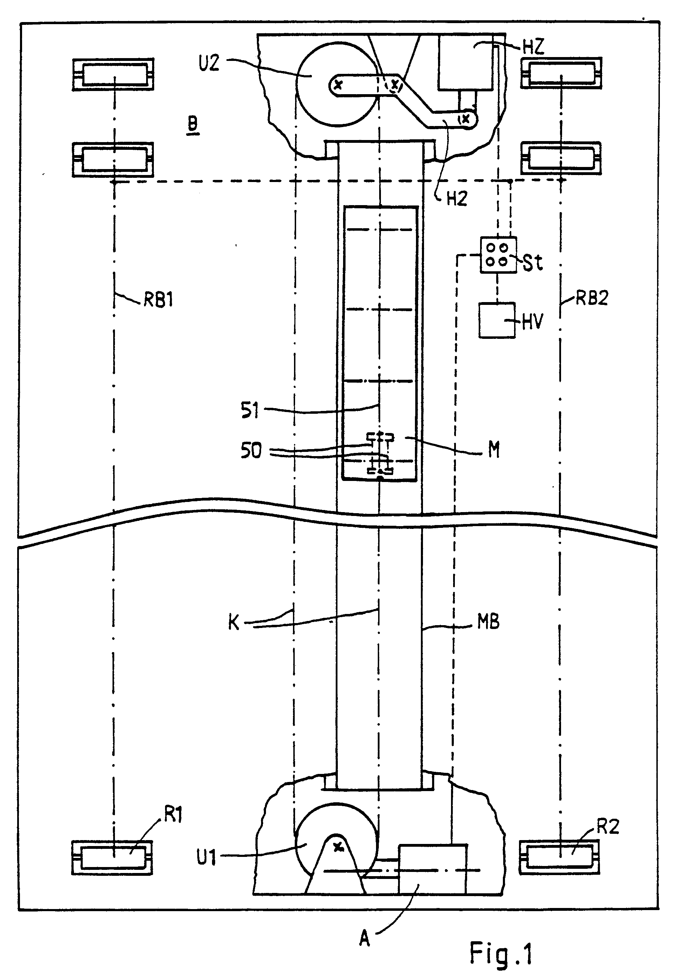

In Fig. 1 ist ein Grundriß einer Fördervorrichtung, die in den Boden B eines Lastkraftfahrzeuges, z. B. eines LKW oder eines Anhängers, eingebaut ist, gezeigt. In bekannter Weise sind parallele Rollenbahnen RB1 , RB2 mit hydraulisch höhenverstellbaren Rollen R1 , R2 angeordnet, auf denen Container oder Paletten zur Be- und Entladung in Bahnrichtung transportiert werden können. Zwischen den Rollenbahnen liegt eine Mitnehmerbahn MB in der ein Mitnehmer M durch einen Kettenzug K, der um endseitige Umlenkräder U1, U2 geführt ist, verfahrbar lagert. Der Boden B ist um die Mitnehmerbahn MB herum geöffnet gezeigt, damit die funktionswichtigen Teile sichtbar sind. Das eine Umlenkrad U1 ist mit einem Antriebsmotor A verbunden, der vorzugsweise ein Elektromotor oder ein Hydraulikmotor ist. Das andere Umlenkrad U2 ist in Spannrichtung der Kette K über einen Hydraulikzylinder HZ oder Pneumatikzylinder verstellbar gelagert. Der Spannantrieb könnte auch ein Elektromotor sein; eine Pneumatik ist dann nicht erforderlich. Hierzu ist an einem zweiarmigen Hebelpaar H2 einerseits das Umlenkrad und andererseits die Kolbenstange des Hydraulikantriebes angelenkt. Der Hydraulikantrieb HZ ist ebenso wie der Hubantrieb der Rollen und der Antrieb A des Umlenkrades U1 mit einem Steuerpult St verbunden. Es ist möglich die beiden hydraulischen Antriebe parallel zu schalten, so daß insbes. bei Betätigung eines Not-Ausschalters sämtliche Rollen der Bahnen und der Mitnehmer versenkt sind, damit bei schrägstehender Ladefläche die gesamte Ladung am Verrutschen gehindert werden kann. Die durch den Hydraulikantrieb HZ bewirkte Spannung der Kette K wird innerhalb der Mitnehmervorrichtung M in eine Hubbewegung umgesetzt, so daß die Haftfläche des Mitnehmers über die entstehende Reibungskraft einen darüberstehenden Container hält.

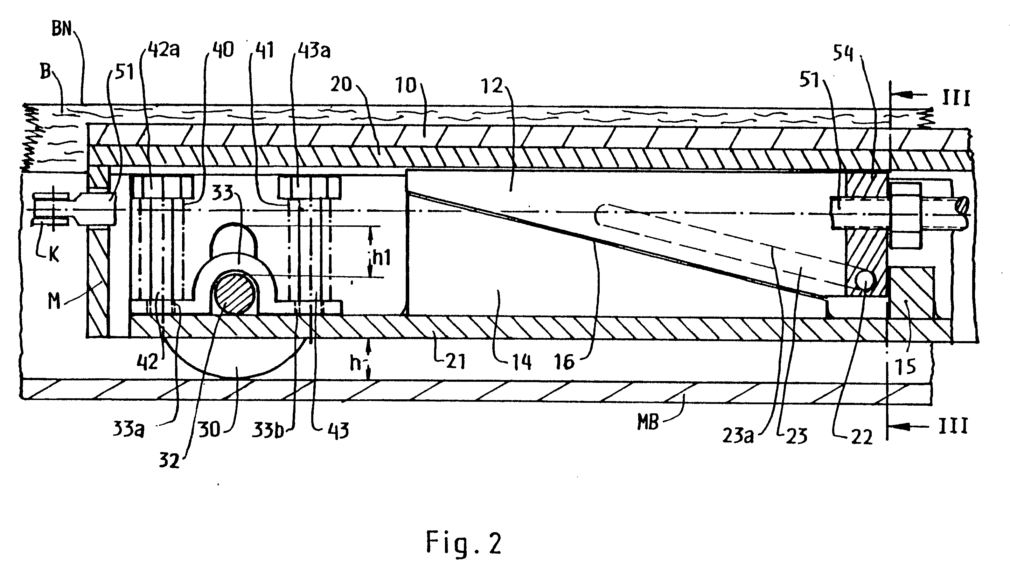

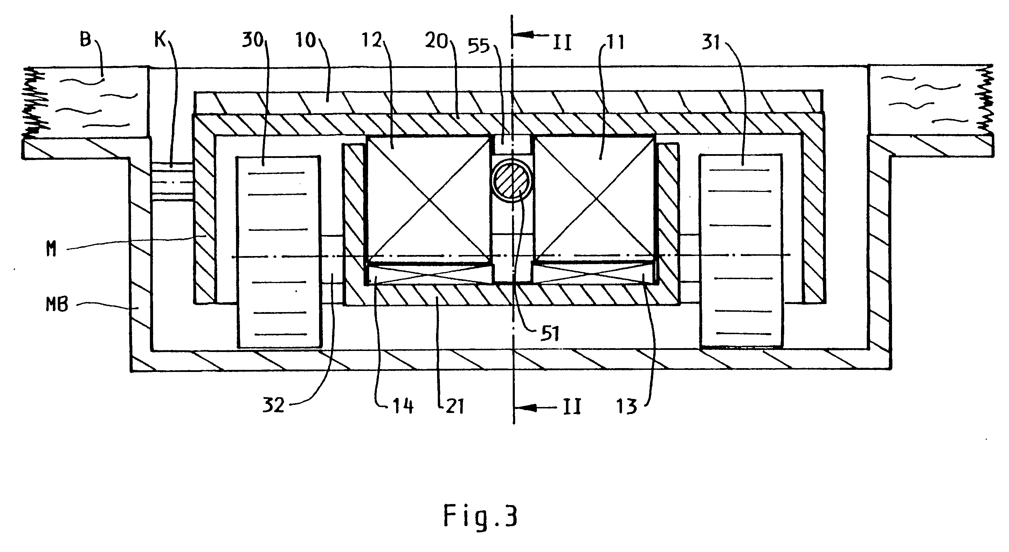

Die Einzelheiten einer Hubsteuerung des Mitnehmers sind aus Fig. 2 bis 4 ersichtlich. Eine flache, leichte Bauweise bei hoher Hubkraft prägt die Konstruktion, weshalb eine U-förmige abgewinkelte Deck- und Grundplatte 20, 21 verwandt wird. Für einen maximalgewichtigen Container muß zur ausreichenden Beschleunigung und Bremsung mit einer Antriebszugkraftübertragung von ca. 8000 N gerechnet werden. Um diese auch bei ungünstigen Reibungsverhältnissen übertragen zu können, wird eine Hubkraft von ca. 16 kN vorgesehen. Um den Kettenantrieb nicht mit mehrfacher Antriebszugkraft zu belasten, wird die Hubkraft über eine Untersetzung auf eine Spannkraft von ca. 4000 N vermindert. Hierzu dienen Keilpaare 11, 13; 12, 14 die mehrfach, z. B. 3-fach über der Länge des Mitnehmers parallel wirkend angeordnet sind.

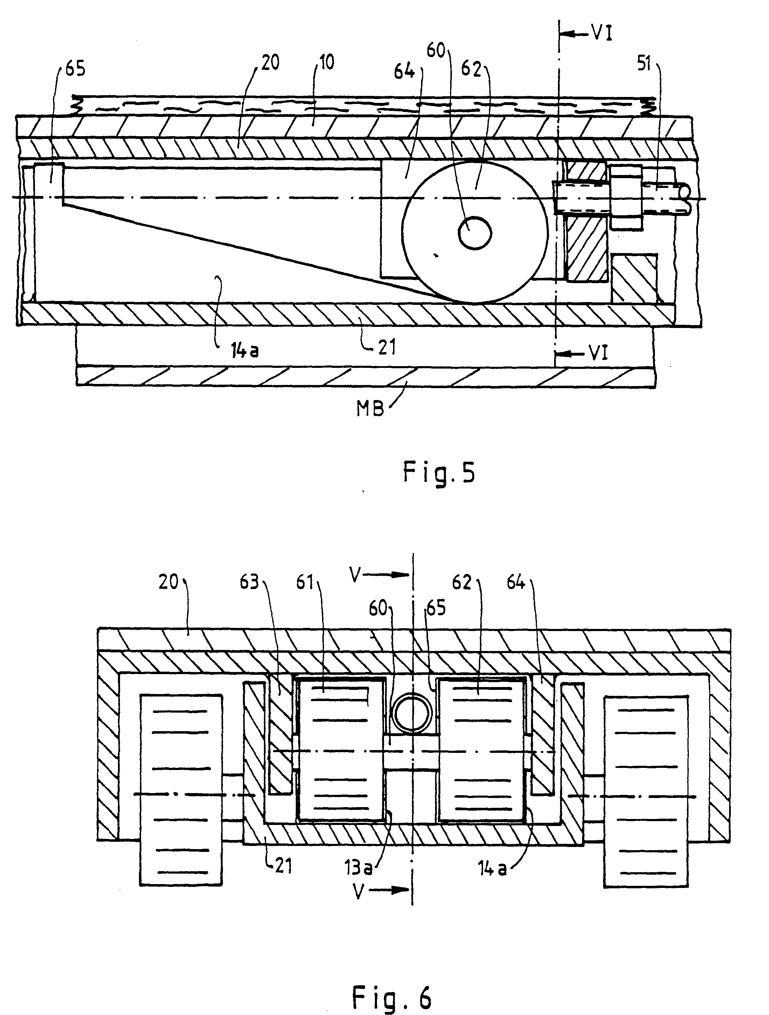

In Fig. 4 ist der Endabschnitt des Mitnehmers gezeigt. Das Rückstellen der Keile bei entspannter Kette K bewirkt ein Federpaar 50, das über Widerlager 52 mit einer Einstellmutter 52a an einer Zugstange 51 befestigt ist. Statt der gezeigten Anordnung der Federn kann auch eine einzige Feder am Ende des Mitnehmers zwischen der Deck-und Grundplatte angeordnet sein. Die Zugstange ist über Verbindungsplatten 54, 54' jeweils mit zwei parallel nebeneinander angeordneten Keilen 11, 12 verbunden. An dem anderen Ende der Zustange ist das eine Ende der Kette K befestigt, und das andere Ende des Federpaares 50 stützt sich an der Grundplatte 21 ab. Die Rückstellkraft der Feder im gespannten Zustand ist zweckmäßig auf ca. 200 N festgelegt. Ihre Anfangsstellung wird über die Mutter 52a auf der Zugstange 51 bestimmt. In der abgesenkten Endstellung liegen die Verbindungsplatten 54 an einem Anschlag 15 an, der zusammen mit den unteren Keilen 13, 14 an der Grundplatte 21 angeschweißt ist. Die Grundplatte ist mit dem anderen Kettenende verbunden, so daß bei Spannung der Kette die Keile auf der Gleitfläche 16 sich verschieben, daß die Deckplatte 20, die obenseitig einen Haftbelag 10 trägt und mit dem Steg 55 in ihrer Seitenlage zwischen den Keilen fixiert ist, sich, nach oben über das Bodenniveau BN hebt. Damit eine vollflächige Kraftwirkung erreicht wird und die Fertigungstoleranzen nicht unnötig eng zu halten sind, ist es vorgesehen, daß die oberen Keile 11, 12 jeweils in ihrer Lage auf der Zugstange 51, die als Gewindestange ausgeführt ist, über die Verbindungsplatte 54 einstellbar ist. Alternativ können auch die Keile an der Verbindungplatte verstellbar befestigt sein oder über Ausgleichsfedern, z. B. Tellerfedern mit dieser elastisch verbunden sein.

Damit bei entspannter Kette die Keile auch unbelastet aufeinanderliegen und die Deckplatte sich absenkt, sind seitlich an der Verbindungsplatte 54 Mitnehmerstifte 22 angeordnet, die an Gleitflächen 23a der schräg in Keilgleitflächenrichtung in den nach oben gebogenen U-Schenkeln der Grundplatte 21 verlaufenden Ausnehmungen 23 anliegen. Ebenso wirkt das Federpaar in Schräglage.

Die linearen Keile können auch durch aquivalente Bauelemente wie Schraubenflächen oder Exzenter ersetzt werden.

Die Grundplatte 21 ist mit Achsen 32 auf zahlreichen Räderpaaren 30, 31 in der U-förmigen, in den Boden B eingelassenen Mitnehmerbahn MB fahrbar gelagert. Die Achse 32 ist gegen die Grundplatte 21 in Höhenrichtung um einen Federweg h1 elastisch verschieblich, der etwas größer ist als der Abstand h der Grundplatte 21 zur Mitnahmerbahn MB, so daß bei insbes. stoßartiger Überlast die Kraft auf die Räder 30, 31 auf die Federkraft begrenzt ist. In der unteren Grundstellung der Achse 32 sind die Federpaare 40, 41, die die Achse 32 mit einem Lagerbügel 33 herunterdrücken, bezogen auf alle entsprechenden Federn des Mitnehmers auf eine solche Vorspannung eingestellt, die der vollen aufzubringenden Mitnehmerhubkraft von ca. 16 kN entspricht. Die Lagerbügel 33 sind mit Bohrungen 33a, 33b in den Führungsbolzen 42, 43 vertikal verschieblich geführt. Die Federn 40, 41 stützen sich an Köpfen 42a, 43a oder Muttern der Führungsbolzen 42, 43 ab. Die U-Schenkel der Grundplatte 21 sind für den Durchtritt der Welle 32 entsprechend mit einer Ausnehmung versehen. Selbstverständlich können auch andere, bekannte Achsfedersysteme oder Stoßdämpfer verwendet werden.

In der dargestellten Ausführung sind zwölf Räderpaare und sechs mal zwei Keilpaare vorgesehen. Selbstverständlich sind auch andere Anordnungen möglich. Auch kann die Druckfederanordnung durch eine Zugfeder ersetzt werden. Die Steuervorrichtung St ist nur schematisch dargestellt, da sie in bekannter Weise aufgebaut sein kann.

In den Fig. 5 und 6 ist aus verschiedenen Schnittansichten eine Alternative zu den Keilpaaren gezeigt. Es läuft jeweils ein Rad 61, 62 auf einer schiefen Ebene, einem Keil 13a, 14a. Bei dieser Anordnung kann wegen der rollenden Reibung die Rückstellkraft der Rückholfeder und die Spannkraft der Kette noch geringer sein. Die kompakte Anordnung der Räder 61, 62, die drehbar auf der Achse 60 zwischen den Wangen 63, 64 an der Deckpl atte 20 gelagert sind, ergibt eine gute, verteilte Kraftübertragung auf diese.

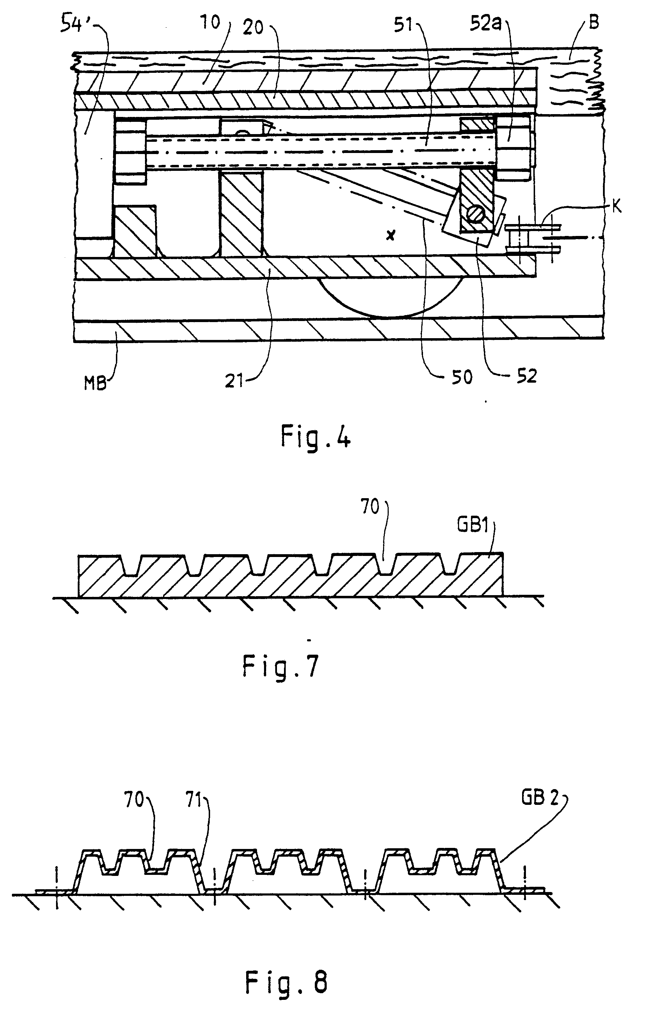

In Fig. 7 und 8 sind Gleitbahnen im Querschnitt dargestellt, die sich insbes. für den Palettentransport eignen. Die genormten Paletten sind jeweils mit 3 Stützenreihen aufgebaut, so daß zweckmäßig die Gleitbahnen unter die äußeren Stützen und die Mitnehmerbahn unter die inneren Stützen gelegt sind. Entsprechend den Stützenabmessungen werden die Gleitbahnen GB1, GB2 etwa 100 mm breit ausgebildet. Eine Höhe von 10 mm ist ausreichend, um Durchbiegungen der Palette, Unebenheiten und kleine Steine des Ladebodens zu überragen. Eine Längsprofilierung 70 von ca. 5 mm Tiefe erhöht die Gleitfähigkeit insbes. auch wenn Rauhigkeiten wie Äste, Nagelköpfe oder Splitkörner sich unter den Palettenbrettern befinden. Außerdem wird eine Abnutzung und Abstumpfung der Gleitflächen als Folge von Verkratzens durch eingeklemmte Splitkörner vermindert oder verhindert.

In Fig. 7 ist ein Vollmaterial aus widerstandsfähigem Kunststoff mit guten Gleiteigenschaften, z. B. Polyamid, vorgesehen.

In Fig. 8 ist ein geprägtes Edelstahlblech gezeigt, das sich mit Rippen 71 auf dem Ladeboden abstützt und dort verschraubt oder vernietet ist.

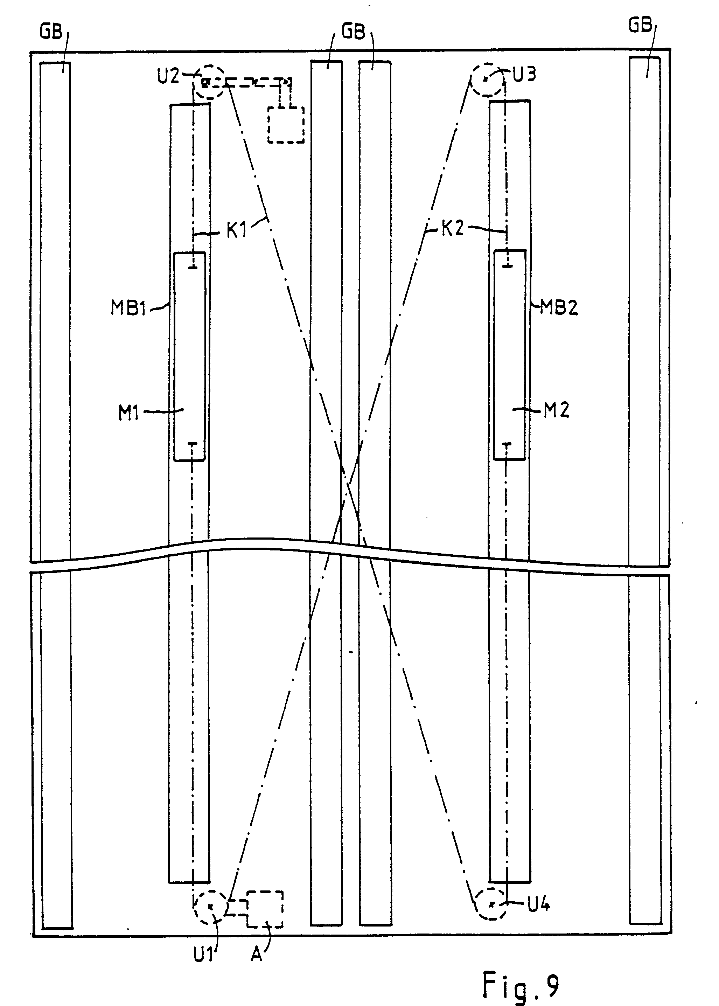

Fig. 9 zeigt eine Ladefläche eines Palettentransporters, bei dem Palettenreihen nebeneinander vorgesehen sind. Es sind jeweils zwei parallele Gleitbahnen GB und dazwischenliegend je eine Mitnehmerbahn MB1, MB2 mit je einem Mitnehmer M1, M2 angeordnet. Die Ketten K1, K2 sind durchgehend über Umlenkräder U1-U4 geführt, von denen eines mit dem Zugantrieb A und ein anderes mit dem Spannantrieb HZ verbunden ist, so daß jeweils beide Mitnehmer M1, M2 sich gleichzeitig heben bzw. senken und gleichzeitig vor- bzw. zurückbewegen. Somit werden jeweils zwei Paletten parallel transportiert. Selbstverständlich können Zugketten auch in anderer Weise über den Antrieb und/oder eine Spannvorrichtung geführt werden, um mit geringem Aufwand Einzel- oder Paralleltransport zu gewährleisten.

In ähnlicher Weise, wie dies für parallele Palettenreihen gezeigt ist, können auch für die relativ wesentlich größeren und schwereren Container parallele Mitnehmerbahnen vorgesehen sein, in denen die Mitnehmer parallel verfahren werden, wobei dann jeweils mehrere, z. B. 4 Mitnehmer, unter einen Container positioniert werden. Rollen- oder Gleitbahnen sind dann nicht erforderlich. Bei langen Bahnen ist diese Bauart auch gegenüber Rollenbahnen relativ leicht, so daß sie für Transportflugzeuge bevorzugt geeignet ist.

## Patentansprüche

1. Fördervorrichtung für Sammeltransportmittel, z. B. Container, die vorzugsweise im Boden (B) eines Laderaumes angeordnet ist und aus parallelen Bahnen (RB1, RB2) besteht, zwischen denen ein über bzw. unter das Bodenniveau (BN) heb- und senkbarer Mitnehmer (M). in einer weiteren parallelen Bahn (MB) fahrbar gelagert ist, der über die gesamte Bahnlänge durch eine um endseitig gelagerte Umlenkräder (U1, U2) hin und zurück umlaufende Zugkette (K) oder ein Zugseil mittels eines Antriebsmotors (A) über eines der Umlenkräder (U1) steuerbar in beide Richtungen verfahrbar ist und der eine Grundplatte (21) und eine Deckplatte (20) hat, die mittels einer Höhenverstellvorrichtung (11, 13; 12, 14; 61, 13a; 62, 14a) gegen die in der Mitnehmerbahn (MB) auf Räderpaaren (30, 31 ) mit Achsen (32) fahrbar gelagerte Grundplatte (21) dadurch höhenverstellbar ist, daß die Deckplatte (20) oder die Grundplatte (21) und die Höhenverstellvorrichtung (11, 13; 12, 14; 61, 13a; 62, 14a) jeweils mit einem Ende der Kette (K) verbunden sind, in deren Spannrichtung eines der Umlenkräder (U2) beweglich gelagert ist, das mit einem steuerbaren Spannantrieb (HZ) verbunden ist, dadurch gekennzeichnet, daß die Achsen (32) der Räderpaare (30, 31) um einen solchen Bereich vertikal beweglich federnd gelagert sind, daß die Grundplatte (21) den Boden der Mitnehmerbahn (MB) erreichen kann, und daß die Achsen (32) jeweils beidseitig auf der Grundplatte (21) in Lagerbügeln (33), die in Führungsbolzen (42, 43) vertikal geführt sind, liegen und auf die Lagerbügel (33) jeweils beidseitig Federpaare (40, 41) drücken, die andererseits sich jeweils an einem Kopf (42a, 43a) oder einer Mutter der Führungsbolzen (42, 43) abstützen, wobei die Federn (40, 41) aller Achsen (32) zusammengenommen so hoch vorgespannt sind, daß, wenn die Achsen in ihrer untersten Stellung sind, die Federn eine vorgegebene Mitnehmerhubkraft aufbringen.

2. Fördervorrichtung nach Anspruch 1, dadurch gekennzeichnet, daß die Höhenverstellvorrichtung aus einer zwischen der Deckplatte (20) und der Bodenplatte (21) befindlichen jeweils gegeneinander angestellten Keilanordnung von über den gesamten Mitnehmer (M) verteilten Keilpaaren (11, 13; 12, 14) besteht, dessen oberer Keil (11, 12) jeweils über eine Zugstange (51) in Zugrichtung einstellbar mit dem einen Kettenende und dessen unterer Keil (13, 14) jeweils mit dem anderen Kettenende verbunden ist, so daß die Keile durch Kettenspannung auf ihren schräg von unten nach oben verlaufenden Gleitflächen (16) sich verschiebend, die Deckplatte (20) anheben, und daß zwischen der Zugstange (51) und der Grundplatte (21) eine Feder (50) angeordnet ist, die vorzugsweise etwa in Keil. Gleitflächenrichtung gerichtet ist und die Zugstange (51) bei entspannter Kette (K) zurückzieht und die Anordnung der oberen Keile (11, 12) mit an Gleitflächen (23a), die in nach oben abgewinkelten Schenkeln der Grundplatte (21) parallel zu den Keilgleitflächen (16) verlaufen, sich mit obenseitig abstützenden Mitnehmerstiften (22) bei der Rückstellung der Keile durch die Feder (50) nach unten geführt wird.

3. Fördervorrichtung nach Anspruch 2, dadurch gekennzeichnet, daß die Keilneigung ca. 1:4 beträgt und die Federkraft der Feder (50) im zusammengezogenen Zustand ca. 400 N beträgt und die Kettenzugkraft bei voller Keilanhebung ca. 4000 N beträgt und die vorgegebene Mitnehmerhubkraft 16 kN beträgt.

4. Fördervorrichtung nach Anspruch 3, dadurch gekezeichnet, daß die Keilpaare (11, 13; 12, 14) jeweils beidseitig der Zugstange (51) angeordnet sind und die oberen Keile (11, 12) jeweils über eine Verbindungsplatte (54) mit der Zugstange (51) verbunden sind und diese eine Gewindestange ist, auf der die Lage der Verbindungsplatte verstellbar ist, und daß die Deckplatte (20) mit einem Steg (55) zwischen den Keilen (11, 12) eingreifend auf diesen aufliegt.

5. Fördervorrichtung nach Anspruch 1, dadurch gekennzeichnet, daß die Höhenverstellvorrichtung aus zwischen der Deckplatte (20) und der Bodenplatte (21) befindlichen und über den gesamten Mitnehmer (M) verteilten paarweisen Anordnungen von jeweils einem gegen die Spannrichtung der Kette (K) ansteigenden Keil (13a, 14a), der jeweils an einer der Platten (21) befestigt ist und einem mit seinem Umfang darauf stehenden Rad (61, 62), das jeweils an der anderen der Platten (20) drehbar gelagert ist, besteht und daß die Deckplatte (20) oder die Grundplatte (21) und die Höhenverstellvorrichtung mit jeweils einem der Enden der Kette (K) verbunden sind, so daß bei gespannter Kette (K) die Räder (61, 62) auf den hohen Keilbereich stehen, wobei der Gesamtweg der Platten (20, 21) gegeneinander bzw. der Räder (61, 62) auf den Keilen (13, 14) durch einen Anschlag (65) begrenzt ist.

6. Fördervorrichtung nach Anspruch 1, dadurch gekennzeichnet, daß die Grundplatte (21) nach oben U-förmig abgewinkelt ist und die Deckplatte (20) nach unten-U-förmig abgewinkelt ist und sie obenseitig eine Haftschicht (10) z. B. aus Asbest oder profiliertem Gummi oder elastischem Kunststoff trägt und die U-Schenkel der Deckplatte (20) einige Millimeter seitlichen Abstand zur Mitnehmerbahn (MB) haben, die nach oben abgewinkelt ist, und die Gesamttiefe der Bahn (MB) unter dem Bodenniveau (BN) ca. 65 mm beträgt und die Höhe des abgesenkten Mitnehmers (M) über dem Boden der Mitnehmerbahn (MB) ca. 60 mm beträgt.

7. Fördervorrichtung nach Anspruch 1, dadurch gekennzeichnet, daß der Spannantrieb (HZ) ein Hydraulik- oder Pneumatikzylinder-Kolben ist, der einerseits am Boden befestigt ist und andererseits mit der Achse des Umlenkrades (U2) verbunden ist, und daß vorzugsweise das Umlenkrad (U2) an einem Armpaar eines zweiarmigen Hebelpaares (H2) schwenkbar gelagert ist, an dessen anderem Armpaar die Kolbenstange des Hydraulikantriebes (HZ) gelenkig angreift.

8. Fördervorrichtung nach Anspruch 1, dadurch gekennzeichnet, daß mehrere Mitnehmerbahnen (MB1, MB2) mit Mitnehmern (M1, M2) parallel zueinander angeordnet sind und die Ketten (K1, K2) beider Mitnehmer durchlaufend hintereinandergehängt sind oder parallel über ein Umlenkrollenpaar am Spannantrieb geführt sind, so daß der eine Spannantrieb (HZ) und ein Antriebsmotor (A) beide Ketten (K1, K2) gleichzeitig beaufschlagen, oder die Ketten (K1, K2) je über einen Spannantrieb (HZ1, HZ2) geführt sind und ein Antriebsmotor (A) mit beiden Kettenantrieben gekoppelt ist.

9. Fördervorrichtung nach Anspruch 1, dadurch gekennzeichnet, daß die zu der Mitnehmerbahn (MB) parallelen Bahnen (GB1, GB2) Gleitbahnen aus Kunststoff, vorzugsweise Polyamid, oder aus Edelstahlblech sind, daß sie eine Längsprofilierung von 5 bis 10 mm Tiefe haben und einen Querschnitt von etwa 10 x 100 mm haben.

10. Fördervorrichtung nach einem der Ansprüche 1 bis 9, dadurch gekennzeichnet, daß die zu der Mitnehmerbahn (MB) parallelen Bahnen, Rollenbahnen (RB1, RB2) mit hydraulisch höhenverstellbaren Rollen (R1, R2) sind und daß Steuerleitungen der hydraulischen Antriebe der Rollenhöhenverstellung und des Spannantriebes (HZ) auf eine einzige Taste eines Steuerpuets (St) geführt sind, deren Betätigung eine schnelle Entleerung aller benannten Antriebe und somit Absenkungen der Rollen (R1, R2) und Mitnehmer (MB) bewirkt.


**Claims**

1. A conveyor for bulk goods, e.g. containers, which is ideally installed in a floor (B) of a loading compartment and which conveyor consists of parallel tracks (RB1, RB2) between which a clutch (M) which can be raised and lowered above and below the floor level (BN) is mounted on a further parallel track (MB) and which clutch (M) can be manoeuvred along the whole length of the track (MB) using a haul chain (K) or cable running forward and back over tail wheels (U1, U2) mounted at either end and which clutch (M) can be manoeuvred in either direction by means of a drive motor (A) acting on one of the tail wheels (U1), und which clutch (M) features a baseplate (21) and a cover plate (20) whose height can be adjusted by means of a height adjustment mechanism (11, 13; 12, 14; 61, 13a; 62, 14a) which acts upon the baseplate (21) which is slide-mounted on the clutch track (MB) on pairs of wheels (30, 31) with shafts (32), such that the baseplate (21) or the cover plate (20) and the height adjustment mechanism (11, 13; 12, 14; 61, 13a) are respectively connected with either end of the chain (K) in whose tensile-load plane there is moveably mounted one of the tail wheels (U2), which is connected with a controllable haul drive (SH); with the distinguishing feature that the shafts (32) of the pairs of wheels (30, 31) are in a spring mounting with vertical movement through such a range of movement that the baseplate (21) can reach the base of the clutch track (MB), and that the shafts (32) are located on either side of the baseplate (21) in bearing frames (33) which run vertically in guide bolts (42, 43) and which press upon pairs of springs (40, 41) on either side, these being supported on a head (42a, 43a) or a nut of guide bolts (42, 43), whereby springs (40, 41) of all the shafts (32) are all pre-stressed to such a degree that when the shafts are in their lowest position the springs apply a preset clutch force.

2. Conveyor as per claim 1, with the distinguishing feature that the height-adjustment mechanism consists of an opposing taper system arranged between cover plate (20) and baseplate (21), with pairs of tapers (11, 13; 12, 14) distributed over the whole of the clutch (M), whose upper taper (11, 12) is connected via a tension bar (51), comprising adjustment facility in the tension plane, with one end of the chain and its lower taper (13, 14), such that the tapers, by displacing themselves under chain tension over their slide-faces (16) which run obliquely upward from below, raise the cover plate (20), and that between the tension bar (51) and the baseplate (21) there is arranged a spring (50) which may be aligned in the taper/slide-face plane and which draws back the tension bar (51) when the chain (K) is released from load, for purposes of resetting the tapers by means of the spring (50) of bringing down the arrangement of the upper tapers (11, 12) together with clutch pins (22) which are supported on the upper side on slide-faces (23a) which run parallel to taper slide-faces (16) in bent-up legs of the baseplate (21).

3. Conveyor a per claim 2, with the distinguishing feature that the taper slope is approximately 1 : 4 and that the spring loading of springs (50) in the compressed state is approximately 400 N and that the chain's tensile load when the taper is fully raised is approximately 4000 N and that the envisaged clutch thrust force is 16 kN.

4. Conveyor as per claim 3, with the distinguishing feature that the pairs of tapers (11, 13; 12, 14) are arranged respectively on either side of the tension bar (51) and that the upper tapers (11, 12) are connected with the tension bar (51) via a connecting plate (54) and that the tension bar (51) is a threaded rod upon which the position of the connecting plate is adjustable and that the cover plate (20) together with a fixed link (55) rests between the tapers (11, 12) and engages with them.

5. Conveyor as per claim 1, with the distinguishing feature that the height-adjustment mechanism consists of paired arrangements located between the cover plate (20) and the baseplate (21) and distributed over the whole of the clutch (M), such arrangements consisting of one taper (13a, 14a) rising against the load plane of the chain (K), this named taper (13a, 14a) mounted on one of the plates (21); and such arrangements also comprising a wheel (61, 62) which is rotatably mounted on the other of the plates (20), and further that the cover plate (20) of the baseplate (21) and the height-adjustment mechanism are connected with either end of the chain (K), such that when the chain (K) is under load, then the wheels (61, 62) stand on the upper taper area, whereby the total travel of the plates (20, 21) over each other and the total travel of the wheels (61, 62) on the tapers (13, 14) are limited by a stopf (65).

6. Conveyor as per claim 1, with the distinguishing feature that the baseplate (21) exhibits an upward U-shaped bend and that the cover plate (20) exhibits a U-shaped downward bend, and that its upper side bears a grip surface (10) consisting, for example, of asbestos, profiled rubber or elastomer, and that the U-legs of the cover plate (20) exhibit a few millimetres of lateral spacing from the clutch track (MB) - which is bent upwards - and the total depth of the track (MB) below floor level (BN) is approximately 65 mm, and that the height of the retracted clutch (M) above the floor of the clutch track (MB) is approximately 60 mm.

7. Conveyor as per claim 1, with the distinguishing feature that the haul drive (HZ) is a hydraulic or pneumatic actuatable cylinder-piston unit one end of which is fixed to the floor and the other end of which is fixed to a shaft of the tail wheel (U2) and that preferably the tail wheel (U2) is mounted to one pair of lever arms of a double sided pair of lever arms whereby the other pair of lever arms of which being connected swivable to the piston shaft of the hydraulic drive (HZ).

8. Conveyor as per claim 1, with the distinguishing feature that several clutch tracks (MB1, MB2) are arranged in parallel with each other with the clutches (M1, M2) and that the chains (K1, K2) of oth the clutches are continuously mounted one behind the other or run in parallel over a pair of tail wheels on the haul drive, such that only one haul drive (HZ) and a drive motor (A) simultaneously drive both the chains (K1, K2) or whereby the chains (K1, K2) are each guided over one haul drive (HZ1, HZ2) and one drive motor (A) is connected with both these chain drives.

9. Conveyor as per claim 1, with the distinguishin feature that tracks (GB1, GB2) which are parallel to the clutch track (MB) are made from plastic, ideally polyamide, or of special steel sheet; that they exhibit longitudinal profiling of 5 to 10 mm depth and that their cross-section measures approximately 10 x 100 mm.

10. Conveyor as per one of claims 1 to 9, whith the distinguishing feature that the tracks parallel to the clutch track (MB) are roller tracks (RB1, RB2) with hydraulically height-adjustable rollers (R1, R2) and that control lines of the roller height adjustment mechanism and of the haul drive (HZ) are connected to individual push buttons on a control panel, which can be activated for rapid draining of all the above-mentioned hydraulic drives, with the result of retraction of the rollers (R1, R2) and the clutch (MB).


**Revendications**

1. Dispositif transporteur pour moyens de transport collectifs, par exemple conteneurs, disposé de préférence dans le fond (B) d'un compartiment à marchandises et composé de voies parallèles (RB1, RB2), entre lesquelles un entraîneur (M), pouvant être élevé et abaissé respectivement au-dessus ou au-dessous du niveau du sol (BN), est logé dans une autre voie parallèle (MB) et peut être déplacé dans les deux sens, sur toute la longueur de voie, à l'aide d'une chaîne de traction (K) ou d'un câble tracteur circulant en avant et en arrière, tournant sur des roues de renvoi (U1, U2), logées aux extrémités, lequel entraîneur est actionné par un moteur de commande (A) et comprend une plaque de fond (21) et une plaque de couverture (20), cette dernière étant réglable en hauteur, à l'aide d'un dispositif de réglage vertical (11, 13; 12, 14; 61, 13a; 62, 14a), par rapport à la plaque de fond (21) qui est logée dans la voie d'entraînement (MB) et déplaçable sur des couples de roues (30, 31) pourvues d'axes (32), le réglage en hauteur étant possible du fait que la plaque de couverture (20) ou la plaque de fond (21) et le dispositif de réglage en hauteur (11, 13; 12, 14; 61, 13a; 62, 14a) sont reliés chacun à une extrémité de la chaîne K, dans le sens de tension de laquelle l'une des roues de renvoi (U2), reliée à une commande de tension réglable (HZ), est logée étant mobile, dispositif transporteur caractérisé par le fait que les axes (32) des couples de roues (30, 31) sont logés, élastiquement mobiles verticalement dans un secteur tel que la plaque de fond (21) puisse atteindre le sol de la voie d'entraînement (MB) et que les axes (32) reposent, chacun, des deux côtés, sur la plaque de fond (21), logés dans des étriers (33), conduits verticalement, et que des couples de ressorts (40, 41) exercent, bilatéralement, une pression sur chacun des étriers (33), ces couples de ressorts s'appuyant, d'autre part, chacun sur une tête (42a, 43a) ou un écrou des broches-guides (42, 43), ce faisant les ressorts (40, 41) de tous les axes (32) sont, à eux tous, si fortement tendus qu'ils assurent une force de levage de l'entraîneur prédéfinie lorsque les axes se trouvent dans leur position la plus basse.

2. Dispositif transporteur selon spécification 1, caractérisé par le fait que le dispositif de réglage en hauteur consiste en une installation de coins, opposés les uns aux autres, ces paires de coins (11, 13: 12, 14) étant réparties sur la totalité de l'entraîneur (M), et le coin supérieur (11, 12), réglable, dans le sens de traction, par l'intermédiaire d'une tige de traction (51), est relié à une extrémité de la chaîne, tandis que le coin inférieur (13, 14) est relié à l'autre extrémité de la chaîne, de sorte que les coins, se décalant, par tension de la chaîne, sur leurs surfaces de glissement formant une ligne oblique du bas vers le haut (16), soulèvent la plaque de couverture (20), et par le fait qu'entre la tige de traction (51) et la plaque de fond (21), un ressort (50) est disposé, dirigé de préférence un peu en direction surface de glissement de coin, lequel ramène la tige de traction (51) lorsque la chaîne (K) est détendue, et que le dispositif de coins supérieurs (11, 12) est guidé vers le bas, lors du rappel des coins, par le ressort (50), avec des broches d'entraînement (22) s'appuyant, côté supérieur, sur des surfaces de glissement (23a) s'étendant parallèlement aux surfaces de glissement des coins (16) dans les pièces pliées en U de la plaque de fond.

3. Dispositif transporteur selon spécification 2, caractérisé par le fait que la pente des coins est d'environ 1 : 4 et la force élastique des ressorts (50) à l'état resserré est d'environ 400 N, la force de traction de chaîne, en plein levage des coins étant d'environ 4000 N et la force de levage prédéterminée de l'entraîneur 16 kN.

4. Dispositif transporteur selon spécification 3, caractérisé par le fait que les paires de coins (11, 13; 12, 14) sont respectivement disposés des deux côtés de la tige de traction (51), les coins supérieurs (11, 12) étant respectivement reliés à la tige de traction (51) par l'intermédiaire d'une plaque de raccordement (54), et que la tige de traction (51) est une tige filetée sur laquelle la position de la plaque de raccordement peut être réglée, et que la plaque de couverture (20) repose sur les coins (11, 12) grâce à une pièce (55) s'encastrant entre ceux-ci.

5. Dispositif transporteur selon spécification 1, caractérisé par le fait que le dispositif de réglage en hauteur consiste en dispositifs de couples de coins, situés entre la plaque de couverture (20) et la plaque de fond (21) et répartis sur la totalité de de l'entraîneur (M), chaque couple comprenant un coin (13a) montant contre le sens de tension de la chaîne (K) et fixé à l'une des plaques (21), et une roue (61, 62) placée dessus avec son pourtour, laquelle roue est logée, étant rotative, sur l'autre plaque (20), et que la plaque de couverture (20) ou la plaque de fond (21) et le dispositif de réglage en hauteur sont reliés chacun à l'une des extrémités de la chaîne (K), de sorte que, la chaîne (K) étant tendue, les roues (61, 62) se trouvent sur la partie élevée des coins, le trajet total des plaques (20, 21), l'une contre l'autre, ou des roues (61, 62) sur les coins se trouve limité par une butée (65).

6. Dispositif transporteur selon spécification 1, caractérisé par le fait que la plaque de fond (21) est pliée en U vers le haut et que la plaque de couverture (20) est pliée en U vers le bas et pourvue sur sa partie supérieure d'une couche adhésive (10), par exemple en amiante ou en caoutchouc profilé ou en matière plastique élastique et que les bras en U de la plaque de couverture (20) se trouvent, latéralement, à un intervalle de quelques millimètres de la voie d'entraînement (MB), pliée vers le haut, et que la profondeur totale de la voie (MB), au-dessous du niveau du sol (BN) est de 65 mm environ et la hauteur du dispositif d'entraînement (M) au-dessus du sol de la voie d'entraînement (MB) comporte environ 60 mm.

7. Dispositif transporteur selon spécification 1 , caractérisé par le fait que la commande de tension (HZ) consiste en un piston de cylindre hydraulique ou pneumatique, fixé, d'une part, au sol et, d'autre part, relié à l'axe de la roue de renvoi (U2) et que, de préférence, la roue de renvoi (U2) est logée pivotante à une paire de bras d'un couple de levier (H2) à deux bras, l'autre paire de bras étant attaquée, de façon articulée, par la bielle du piston de la commande hydraulique (HZ).

8. Dispositif transporteur selon spécification 1, caractérisé par le fait que plusieurs voies d'entraînement (MB1, MB2) sont disposées parallèlement, avec des dispositifs d'entraînement (M1, M2) et que les chaînes (K1, K2) des deux entraîneurs sont conduites en continu l'une derrière l'autre ou parallèlement par l'intermédiaire d'un couples de rouleaux de renvoi, à la commande de tension (HZ), de sorte qu'une commande de tension (HZ) et un moteur d'entraînement (A) attaquent simultanément les deux chaînes (K1, K2) ou que les chaînes (K1 ,K2) se trouvent guidées chacune par une commande de tension (HZ1, HZ2),et un moteur de commande (A) accouplé aux deux commandes de chaînes.

9. Dispositif transporteur selon spécification 1, caractérisé par le fait que les voies (GB1, GB2) parallèles à la voie d'entraînement (MB) sont des voies de glissement en matière plastique, de préférence en polyamide, ou en tôle d'acier inoxydable, et qu'elles présentent une profondeur de profil longitudinal de 5 à 10 mm et une section transversale d'environ 10 x 100 mm.

10. Dispositif transporteur selon l'une des spécifications de 1 à 9, caractérisé par le fait que les voies parallèles à la voie d'entraînement (MB) sont des voies à rouleaux (RB1, RB2) pourvues de rouleaux (R1, R2) réglables hydrauliquement en hauteur et que les conduites de commande de la commande hydraulique pour le réglage en hauteur des rouleaux et de la commande de tension (HZ) sont rattachées à une seule touche d'un pupître de commande (ST) dont l'actionnement produit une vidange de toutes les commandes citées et, de ce fait, un abaissement des rouleaux (R1, R2) et entraîneurs (MB).

Fig.1

Fig. 2

B K 30 10 12 20 55 II 11 31

M

MB

32 14 21 II 13

51

0 214 146

Fig.3

Fig. 5

Fig. 6

Fig. 4

Fig. 7

Fig. 8

**0 214 146**

Fig. 9

11